# EUROPÄISCHE PATENTANMELDUNG

(11) **EP 1 995 488 A1**
(43) Veröffentlichungstag der Anmeldung: **26.11.2008**
(21) Anmeldenummer: 08003425.9
(22) Anmeldetag: 26.02.2008
(51) Int. Cl.: F16D 65/12

(54) **Verfahren zur Herstellung eines Kernkörpers für einen Reibkörper einer innen belüfteten faserverstärkten Bremsscheibe und Reibkörper**

(30) Priorität: 25.05.2007 DE 102007024430
(71) Anmelder: Dr. Ing. h.c. F. Porsche Aktiengesellschaft, 70435 Stuttgart (DE)
(72) Erfinder: Renz, Ralph, 71069 Sindelfingen (DE); Seifert, Gerd, 71254 Ditzingen (DE); Raab, Henry, 70806 Kornwestheim (DE)

(57) **Zusammenfassung**

Die Erfindung betrifft die Fertigung innen belüfteter faserverstärkter Bremsscheiben. Die Fertigung innen belüfteter Bremsscheiben, insbesondere auf Keramikbasis, lässt sich wesentlich effizienter gestalten, wenn ein Kernkörper (3) für einen Reibkörper aus mindestens einem Stegmodul (4) und mindestens zwei Trägerkörpern (1, 1a, 1b) zusammengesetzt wird, wobei das Stegmodul (4) mehrere Stegelemente (2) und mindestens einen die Stegelemente (2) miteinander verbindenden Verbindungsbereich (5, 5a, 5b, 5c) aufweist. Derart wird ein flexibles und kostengünstiges Verfahren zur Fertigung von Kernkörpern (3) für Bremsscheiben mit unterschiedlichen Steggeometrien bereitgestellt.

## Beschreibung

Die Erfindung betrifft ein Verfahren zur Herstellung eines Kernkörpers für einen Reibkörper einer innen belüfteten faserverstärkten Bremsscheibe. Dabei weist ein derartiger Kernkörper Stege auf, die Lüftungskanäle der Bremsscheibe definieren. Die Erfindung betrifft auch einen entsprechenden Reibkörper zur Verwendung in einer innen belüfteten Bremsscheibe.

Die DE 44 45 226 A1 beschreibt eine Bremsscheibe für eine Scheibenbremse von Fahrzeugen, wobei die Bremsscheibe aus einem Werkstoff der Gruppe der Kohlenstoffe besteht, und wobei die einzelnen Bauteile, wie Reibringe und Rippen, über eine unlösbare Verbindung aneinander befestigt werden. Gemäß der DE 44 45 226 A1 wird vorgeschlagen, die radialen Rippen separat zu den Reibringen herzustellen, wobei die radialen Rippen in eingeformten Nuten in Innenflächen der Reibringe eingesetzt und in diesen unlösbar befestigt werden können, so dass die beiden Reibringe zur Bildung der Bremsscheibe miteinander verbunden sind. Es wird auch vorgeschlagen, die Bremsscheibe hälftig so herzustellen, dass jeweils an einem Reibring die radialen Rippen mit halber Wandbreite angeformt sind, wobei eine Verbindung der Reibringe dann über die Stirnfläche der Rippen, die hierzu entsprechend ausgebildet sein können, erfolgen kann.

Die DE 100 60 566 B4 beschreibt ein Verfahren zum Herstellen eines Reibkörpers aus siliziumfiltriertem, kohlenstofffaserverstärktem porösen Kohlenstoff, wobei auf einem Kernkörper wenigstens eine gesonderte Reibschicht vorgesehen ist. Weiterhin setzt die DE 100 60 566 B4 als bekannt voraus, dass der Kernkörper einer Reibeinheit im Falle einer innen belüfteten Bremsscheibe zweiteilig ausgebildet sein kann, wobei Kühlkanäle in einer Verbindungsebene gebildet sind.

Aufgabe der vorliegenden Erfindung ist es, ein Verfahren zur Herstellung eines Kernkörpers für einen Reibkörper einer innen belüfteten Bremsscheibe bereitzustellen, welches einfacher in der Handhabung, variabler und kostengünstiger ist als bekannte Herstellungsverfahren.

Diese Aufgabe wird erfindungsgemäß gelöst durch die Merkmale des unabhängigen Patentanspruchs 1. Vorteilhafte Weiterbildungen der Erfindung sind Gegenstand der abhängigen Patentansprüche. Die Aufgabe wird auch gelöst durch einen Reibkörper gemäß Patentanspruch 15.

Erfindungsgemäß wird bei einem Verfahren der eingangs genannten Art ein Kernkörper aus mindestens einem Stegmodul und zwei Trägerkörpern zusammengesetzt, wobei das Stegmodul mehrere Stegelemente und mindestens einen die Stegelemente miteinander verbindenden Verbindungsbereich aufweist. Dabei liegt ein wesentlicher Vorteil darin, dass der Kernkörper aus bei der Fertigung einfach handhabbaren Elementen mit geringen Ausschussraten hergestellt werden kann. Der erfindungsgemäße Herstellungsvorgang ist im Vergleich zum Stand der Technik einfacher in der Handhabung, flexibler und reproduzierbarer. Beispielsweise können ohne wesentliche Veränderungen des Herstellungsverfahrens und der verwendeten Werkzeuge unterschiedliche Steggeometrien bzw. unterschiedliche Geometrien der Lüftungskanäle in einfacher Weise realisiert werden. Einerseits ermöglicht dies die Fertigung auch komplexer Steggeometrien mit vertretbarem Aufwand. Andererseits können beispielsweise zur Herstellung von Bremsscheiben mit gleichem Durchmesser, jedoch mit unterschiedlicher Steggeometrie identische Trägerkörper verwendet werden.

Der erfindungsgemäße Reibkörper weist bedingt durch sein Herstellungsverfahren eine äußerst hohe Materialhomogenität auf, wobei der Verlauf der Verstärkungsfasern - insbesondere bedingt durch das Zusammensetzen von Bauteilen mit ebenen Geometrien - zumindest weitestgehend ungestört ist.

Eine weitere Vereinfachung des Herstellungsverfahrens kann erreicht werden, wenn das verwendete Stegmodul unter Zuhilfenahme eines Spritzgussverfahrens hergestellt wird.

Mit Vorteil kann zumindest das Stegmodul vor dem Zusammensetzen des Kernkörpers einer Pyrolyse unterzogen werden.

Mit Vorteil und vorzugsweise alternativ zur letztgenannten Weiterbildung der Erfindung, kann der zusammengesetzte Kernkörper einer Pyrolyse unterzogen werden.

Mit Vorteil können die Stegelemente und die Verbindungsbereiche des Stegmoduls aus unterschiedlichen Materialien und/oder mit unterschiedlicher Materialzusammensetzung hergestellt werden.

Mit Vorteil kann der mindestens eine Verbindungsbereich des Stegmoduls während der Pyrolyse zumindest nahezu vollständig aufgelöst werden. Derart wird z.B. der Arbeitsaufwand für die Reinigung der Lüftungskanäle deutlich reduziert.

Mit Vorteil kann als Werkstoff für den mindestens einen Verbindungsbereich des Stegmoduls zumindest ein thermoplastischer Kunststoff verwendet wird.

Mit Vorteil können die Stegelemente und die Verbindungsbereiche des Stegmoduls in zumindest weitestgehend homogener Materialzusammensetzung hergestellt werden.

Mit Vorteil kann der mindestens eine Verbindungsbereich des Stegmoduls ringförmig ausgebildet sein. Derart können die Stegelemente bei verhältnismäßig geringem Materialaufwand zuverlässig fixiert werden. Weiterhin kann sich das Entfernen des mindestens einen Verbindungsbereichs dadurch deutlich vereinfachen;

Mit Vorteil kann der mindestens eine Verbindungsbereich des Stegmoduls durch mechanische Bearbeitung entfernt werden. Das Entfernen erfolgt dabei nach dem Zusammensetzen des Kernkörpers. Vorzugsweise kann diese mechanische Bearbeitung nach der Pyrolyse erfolgen. Es kann zweckmäßig sein, die mechanisch Bearbeitung vor der Keramisierung durchzuführen, da die Materialhärte dann in der Regel geringer ist.

Mit Vorteil können zumindest der Trägerkörper und die Stegelemente des Stegmoduls nach der Pyrolyse keramisiert werden.

Mit Vorteil kann der Kernkörper spätestens vor der Keramisierung mit mindestens einer gesonderten Reibschicht versehen werden.

Mit Vorteil kann bei der Formgebung der Trägerkörper auf die Trägerkörper jeweils eine Reibschicht aufgebracht werden.

Mit Vorteil kann eine Perforierung auf die Trägerkörper und die Reibschichten aufgebracht werden.

Weitere Einzelheiten und Vorteile der Erfindung werden nachfolgend beispielhaft unter Bezugnahme auf die Zeichnungen erläutert. Es zeigen, jeweils schematisch,
- Fig. 1a: einen Trägerkörper in Draufsicht,
- Fig. 1b: mehrere Stegelemente in Draufsicht,
- Fig. 1c: einen Kernkörper in Draufsicht,
- Fig. 1d: einen Kernkörper in Seitenansicht,
- Fig. 2: ein Stegmodul,
- Fig. 3: ein Stegmodul.

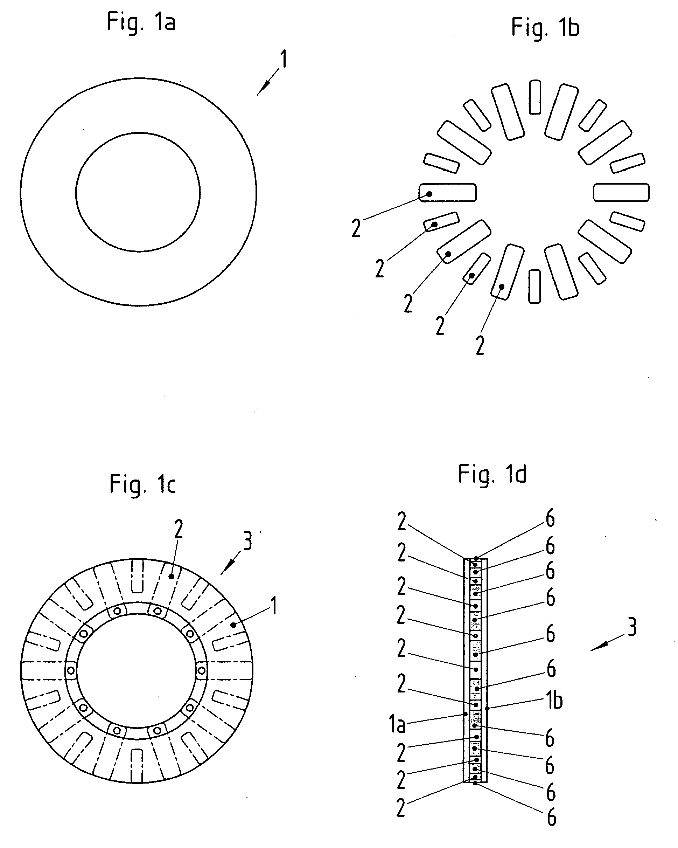

Fig. 1a zeigt schematisch einen Trägerkörper 1 in Draufsicht. Fig. 1b zeigt mehrere Stegelemente 2. Fig. 1c zeigt schematisch und in Draufsicht ein Beispiel für einen fertig gestellten Kernkörper 3 für einen Reibkörper einer innen belüfteten Bremsscheibe, wobei die zwischen zwei Trägerkörpern 1a, 1b angeordneten Stegelemente 2 angedeutet sind.

Unter einer innen belüfteten Bremsscheibe wird eine Bremsscheibe verstanden, deren Reibkörper Lüftungskanäle aufweist. Fig. 1d zeigt schematisch und in Seitenansicht dasselbe Beispiel für einen fertig gestellten Kernkörper 3 mit zwei Trägerkörpern 1a, 1b, zwischen denen mehrere Stegelemente 2 angeordnet sind. Erkennbar sind in Fig. 1d auch die von den Stegelementen 2 begrenzten Abschnitte 6 der Lüftungskanäle, welche in Fig. 1c nicht näher bezeichnet sind. Bei der Ansicht des Kernkörpers 3 gemäß Fig. 1c sind die Stege 2 angedeutet obwohl sie tatsächlich von der Trägerschicht 1 verdeckt werden. Durch die Stegelemente 2 werden die Lüftungskanäle in der Bremsscheibe definiert. Aus Gründen der besseren Übersicht sind etwaige Reibschichten, die auf der Außenseite der Trägerkörper 1a, 1b angeordnet sein können, in den Zeichnungen nicht näher dargestellt. Fig. 1b zeigt nur eine beispielhafte Ausbildung und Anordnung der Stegelemente 2. Tatsächlich sind auch andere Ausbildungen und/oder Anordnungen der Stegelemente 2 möglich. Es ist z. B. auch möglich die Steggeometrien evolventenförmig auszubilden. Durch unterschiedliche Anordnung und/oder Ausbildung der Stegelemente 2 können unterschiedliche Steggeometrien definiert werden. Die Steggeometrie bestimmt die Ausbildung der Lüftungskanäle der Bremsscheibe.

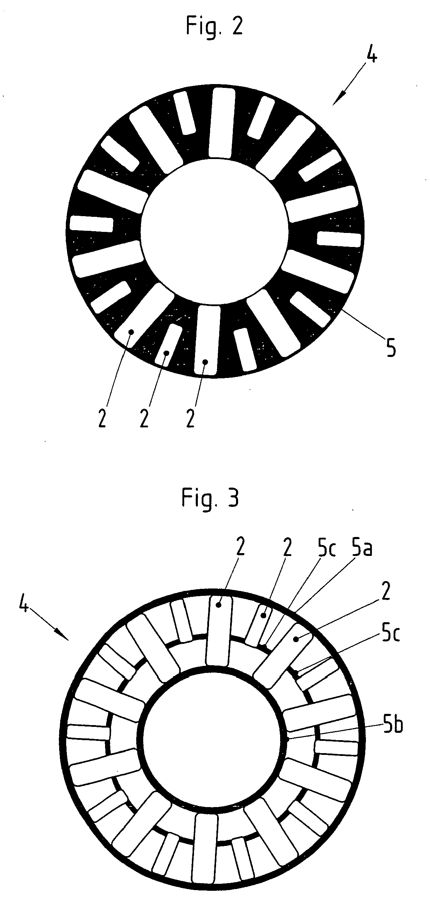

Fig. 2 zeigt ein Beispiel für ein Stegmodul 4, welches zur Herstellung eines Kernkörpers 3 verwendet wird, wobei die Stegelemente 2 des Stegmoduls 4 in einen Verbindungsbereich 5 eingebettet sind.

Fig. 3 zeigt ein weiteres Beispiel für ein Stegmodul 4, welches zur Herstellung eines Kernkörpers 3 verwendet wird, wobei die Stegelemente 2 des Stegmoduls 4 durch mehrere Verbindungsbereiche 5a, 5b, 5c miteinander verbunden sind. Die in Fig. 3 gezeigten Verbindungsbereiche 5a, 5b, 5c sind als konzentrische zumindest im Wesentlichen ringförmige Hilfsstege ausgebildet.

Zur Herstellung eines Kernkörpers 3 für eine innen belüftete faserverstärkte Bremsscheibe, welche einen Reibkörper mit einem Kernkörper 3 aufweist, wobei auf dem Kernkörper 3 mindestens eine gesonderte Reibschicht vorgesehen ist, werden zunächst zumindest zwei Trägerkörper 1 bzw. 1a und 1b und ein Stegmodul 4 hergestellt und dann zu einem Kernkörper 3 zusammengesetzt. Ein Beispiel für den Kernkörper 3 ist in den Fig. 1c und 1d vereinfacht, beispielhaft und schematisch dargestellt. Der zusammengesetzte Kernkörper 3 wird anschließend pyrolisiert, wobei sich der mindestens eine Verbindungsbereich 5 bzw. 5a, 5b, 5c bei entsprechender Materialwahl zumindest nahezu vollständig auflöst. Besteht der mindestens eine Verbindungsbereich 5 bzw. 5a, 5b, 5c ganz oder teilweise aus einem Material, welches sich während der Pyrolyse nicht auflöst, so kann das verbleibende Material nach der Pyrolyse durch mechanische Bearbeitung entfernt werden. Anschließend erfolgt eine Keramisierung, welche vorzugsweise mit flüssigem Silizium bei hoher Temperatur, z. B. bei einer Temperatur größer 1420°C (Schmelzpunkt von Silizium) erfolgt.

Die Pyrolyse erfolgt vorzugsweise unter Luftabschluss bzw. in einem Schutzgas. Es ist auch möglich, dass die Trägerkörper 1 bzw. 1a und 1b und das Stegmodul 4 - bzw. zumindest das Stegmodul 4 - vor dem Zusammensetzen zu dem Kernkörper 3 getrennt pyrolisiert werden. In diesem Fall ist es wichtig, dass sich die Verbindungsbereiche 5 bzw. 5a, 5b, 5c des Stegmoduls 4 sich bei der Pyrolyse nicht vollständig auflösen und die Verbindung der Stegelemente 2 des Stegmoduls 4 zumindest bis zum Zusammenbau des Kernkörpers gewährleistet bleibt. Auch in diesem Fall wird der zusammengesetzte Kernkörper 3 keramisiert.

Die vorzugsweise zwei Reibschichten können einzeln hergestellt werden oder bei der Formgebung der Trägerkörper 1, 1a, 1b direkt auf die Trägerkörper 1, 1a, 1b aufgepresst werden. Entsprechend können die Reibschichten gradiert oder in Schichtaufbau ausgebildet sein.

Bei der Herstellung perforierter Bremsscheiben werden Perforationsbohrungen in die Trägerkörper 1, 1a, 1b und die Reibschichten eingebracht. Vorzugsweise kann das Einbringen der Perforationsbohrungen direkt beim Pressen der Trägerkörper 1, 1a, 1b und/oder der Reibschichten über entsprechende Formgestaltung der Pressform eingebracht werden. Dies ist besonders vorteilhaft bei gleichzeitiger Herstellung von Trägerkörpern 1, 1a, 1b und den zugehörigen Reibschichten.

Ein zur Herstellung des Kernkörpers 3 verwendetes Stegmodul 4 weist mehrere Stegelemente 2 und mindestens einen mit den Stegelementen 2 verbundenen Verbindungsbereich 5 (siehe Fig. 2) bzw. 5a, 5b, 5c (siehe Fig. 3) auf. Zur Herstellung des Kernkörpers 3 sind die Stegelemente 2 des Stegmoduls 4 über mindestens einen Verbindungsbereich 5 bzw. 5a, 5b, 5c miteinander verbunden.

Der mindestens eine Verbindungsbereich 5 bzw. 5a, 5b, 5c kann vorzugsweise aus einem pyrolisierbaren Material ausgebildet sein und fixiert die Stegelemente 2 bei der Herstellung des Kernkörpers 3. Der mindestens eine Verbindungsbereich 5 bzw. 5a, 5b, 5c weist als Werkstoff vorzugsweise einen thermoplastisches Kunststoff, z.B. ein Methacrylat, beispielsweise Polymethacrylmethylimid auf. Die Stegelemente 2 und/oder der mindestens eine Verbindungsbereich 5 bzw. 5a, 5b, 5c können mittels Spritzgusstechnik hergestellt werden. Die Verbindung der Stegelemente 2 zu einem Stegmodul 4 vereinfacht die Zusammensetzung des Kernkörpers 3, wesentlich. Wie in Fig. 3 anhand eines Beispiels dargestellt, können die Stegelemente 2 des Stegmoduls 4 mittels zumindest im Wesentlichen ringförmiger Verbindungsbereiche 5a, 5b, 5c verbunden sein. Mit Vorteil sind zumindest Verbindungsbereiche 5a und/oder 5b vorgesehen, die als Außen- und/oder Innenring ausgebildet sind. Derartige Verbindungsbereiche 5a bzw. 5b können nach der Pyrolyse und/oder erst nach der Keramisierung durch mechanische Bearbeitung entfernt werden. Besonders einfach ist das Entfernen durch mechanische Bearbeitung bei als Außen- und/oder Innenring ausgebildeten Verbindungsbereichen 5a bzw. 5b.

Es kann von Vorteil sein, wenn der mindestens eine Verbindungsbereich 5a, 5b, 5c und die Stegelemente 2 aus dem gleichen Material hergestellt werden. Vorzugsweise können der mindestens eine Verbindungsbereich 5a, 5b, 5c und die Stegelemente 2 dabei als ein einziges Spritzgussteil hergestellt werden. Bei Herstellung des mindestens einen Verbindungsbereichs 5a, 5b, 5c und der Stegelemente 2 aus dem gleichen Material wird mindestens eine Verbindungsbereich 5a, 5b, 5c bei der Pyrolyse nicht aufgelöst, sondern später mechanisch entfernt. Dies kann insbesondere bei ringförmiger oder ähnlicher Ausbildung des mindestens einen Verbindungsbereichs 5a, 5b, 5c von Vorteil sein.

Die Verbindung der Stegelemente 2 mit den Trägerkörpern 1, 1a, 1b kann formschlüssig oder stumpf erfolgen. Zur Erzeugung des Formschlusses können Ausnehmungen bzw. Erhebungen in die Trägerkörper 1, 1a, 1b gepresst werden. Um eine sehr homogene Struktur zu gewährleisten, weisen diese Ausnehmungen bzw. Erhebungen nur eine geringe Tiefe bzw. Höhe, vorzugsweise kleiner 1 mm, auf. Die Höhe des mindestens einen Verbindungsbereichs 5, 5a, 5b, 5c ist maximal gleich der maximalen Höhe der Stegelemente 2. Vorzugsweise ist die maximale Höhe des mindestens einen Verbindungsbereichs 5, 5a, 5b, 5c maximal gleich der Mindesthöhe der Stegelemente 2. Die Stegelemente 2 können, müssen aber nicht, zumindest teilweise unterschiedliche Höhen aufweisen. Vorzugsweise kann zur Verbindung von Stegelementen 2 und Trägerkörpern 1, 1a, 1b zumindest zwischen den Stegelementen 2 und den Trägerkörpern 1, 1a, 1b eine kohlenstoffreiche Fugepaste eingebracht werden.

Die Stegelemente 2 und die Trägerkörper 1, 1a, 1b werden vorzugsweise unter Verwendung von Kohlenstofffasern und Harz gefertigt. Weiterhin wird zur Herstellung des Kernkörpers auch Silizium für die Keramisierung verwendet. Als Werkstoff verwendet werden können kohlenstofffaserverstärkte Kunststoffe, kohlenstofffaserverstärkte Kohlenstoffe und/oder kohlenstofffaserverstärkte Keramik. Vorzugsweise kann karbonfaserverstärktes Siliziumcarbid, welches vorzugsweise aus Kohlenstofffaser als Verstärkungskomponente und aus Silizium und Siliziumcarbid als Matrixkomponente besteht, verwendet werden. Vorzugsweise wird ein kohlenstofffaserverstärkter Werkstoff auf Basis einer Keramikmatrix verwendet. Aufgrund der für den Kernkörper 3 bzw. für den Reibkörper verwendeten Werkstoffe spricht man von einer Keramikbremsscheibe. Die zur Herstellung der Trägerkörper 1, 1a, 1b verwendeten Kohlenstofffasern können aus Festigkeitsgründen zumindest teilweise in Lastrichtung orientiert sein. Für hohe Festigkeitsanforderungen können auch zusätzliche Fasergewebe, Fasergelege und/oder konzentrische Langfasern mit verpresst werden. In Abhängigkeit der Anforderungen kann der Werkstoff in radialer Richtung auch gradiert ausgeführt werden. So können am festigkeitskritischen Innendurchmesser längere und am Außendurchmesser kürzere, in der Regel kostengünstigere Fasern eingesetzt werden.

Ein wesentlicher Gedanke, der zur Erfindung beiträgt, lässt sich wie folgt zusammenfassen: Die Fertigung innen belüfteter Bremsscheiben, insbesondere auf Keramikbasis, lässt sich wesentlich effizienter gestalten, wenn ein Kernkörper 3 für einen Reibkörper aus mindestens einem Stegmodul 4 und mindestens zwei Trägerkörpern 1, 1a, 1b zusammengesetzt wird, wobei das Stegmodul 4 mehrere Stegelemente 2 und mindestens einen die Stegelemente 2 miteinander verbindenden Verbindungsbereich 5, 5a, 5b, 5c aufweist. Derart wird ein flexibles und kostengünstiges Verfahren zur Fertigung von Kernkörpern 3 für Bremsscheiben mit unterschiedlichen Steggeometrien bereitgestellt.

## Patentansprüche

1. Verfahren zur Herstellung eines Kernkörpers (3) für einen Reibkörper einer innen belüfteten faserverstärkten Bremsscheibe, **dadurch gekennzeichnet, dass** der Kernkörper (3) aus mindestens einem Stegmodul (4) und zwei Trägerkörpern (1, 1a, 1b) zusammengesetzt wird, wobei das Stegmodul (4) mehrere Stegelemente (2) und mindestens einen die Stegelemente (2) miteinander verbindenden Verbindungsbereich (5, 5a, 5b, 5c) aufweist.

2. Verfahren nach Patentanspruch 1, wobei das Stegmodul (4) unter Zuhilfenahme eines Spritzgussverfahrens hergestellt wird.

3. Verfahren nach Patentanspruch 1 oder 2, wobei zumindest das Stegmodul (4) vor dem Zusammensetzen des Kernkörpers (3) pyrolisiert wird.

4. Verfahren nach Patentanspruch 1 oder 2, wobei der zusammengesetzte Kernkörper (3) pyrolisiert wird.

5. Verfahren nach einem der vorangehenden Patentansprüche, wobei die Stegelemente (2) und die Verbindungsbereiche (5, 5a, 5b, 5c) des Stegmoduls (4) aus unterschiedlichen Materialien und/oder mit unterschiedlicher Materialzusammensetzung hergestellt werden.

6. Verfahren nach Patentanspruch 5, wobei der mindestens eine Verbindungsbereich (5, 5a, 5b, 5c) des Stegmoduls (4) während der Pyrolyse zumindest nahezu vollständig aufgelöst wird.

7. Verfahren nach einem Patentanspruch 6, wobei als Werkstoff für den mindestens einen Verbindungsbereich (5, 5a, 5b, 5c) des Stegmoduls (4) thermoplastischer Kunststoff verwendet wird.

8. Verfahren nach einem der Patentansprüche 1 bis 4, wobei die Stegelemente (2) und die Verbindungsbereiche (5, 5a, 5b, 5c) des Stegmoduls (4) in zumindest weitestgehend homogener Materialzusammensetzung hergestellt werden.

9. Verfahren nach einem der vorangehenden Patentansprüche, wobei der mindestens eine Verbindungsbereich (5a, 5b, 5c) des Stegmoduls (4) ringförmig ausgebildet ist.

10. Verfahren nach einem der vorangehenden Patentansprüche, wobei der mindestens eine Verbindungsbereich (5, 5a, 5b, 5c) oder Teile des mindestens einen Verbindungsbereichs (5, 5a, 5b, 5c) des Stegmoduls (4) durch mechanische Bearbeitung entfernt werden.

11. Verfahren nach einem der vorangehenden Patentansprüche, wobei der Kernkörper (3) mit zumindest den Trägerkörpern (1, 1a, 1b) und den Stegelementen (2) des Stegmoduls (4) keramisiert wird.

12. Verfahren nach Patentanspruch 11, wobei der Kernkörper (3) spätestens vor der Keramisierung mit mindestens einer gesonderten Reibschicht versehen wird.

13. Verfahren nach Patentanspruch 12, wobei bei der Formgebung der Trägerkörper (1, 1a, 1b) auf die Trägerkörper (1, 1a, 1b) jeweils eine Reibschicht aufgebracht wird.

14. Verfahren nach Patentanspruch 12 oder 13, wobei eine Perforierung auf die Trägerkörper (1, 1a, 1b) und die Reibschichten aufgebracht wird.

15. Reibkörper zur Verwendung in einer innen belüfteten faserverstärkten Bremsscheibe, wobei der Reibkörper einen nach einem der vorangehenden Patentansprüche hergestellten Kernkörper (3) aufweist, wobei auf dem Kernkörper (3) mindestens eine gesonderte Reibschicht vorgesehen ist.
